# EUROPEAN PATENT APPLICATION

(11) **EP 2 750 400 A2**
(43) Date of publication of application: **02.07.2014**
(21) Application number: 13198085.6
(22) Date of filing: 18.12.2013
(51) Int. Cl.: H04N 21/431, H04N 21/482

(54) **Information processing device, information processing method, and program**

(30) Priority: 28.12.2012 JP 2012286727
(71) Applicant: Sony Corporation, Tokyo 108-0075 (JP)
(72) Inventor: Terasawa, Miyako, Tokyo, 108-0075 (JP); Nishiyama, Kazuo, Tokyo, 108-0075 (JP); Matsuura, Koji, Tokyo, 108-0075 (JP); Yamaura, Kenichi, Tokyo, 108-0075 (JP); Kusanagi, Kou, Tokyo, 108-0075 (JP); Yanagisawa, Keisuke, Tokyo, 108-0075 (JP)
(74) Representative: Beder, Jens

(57) **Abstract**

An information processing device includes an operation input unit which inputs a user operation, a U/I screen generation unit which generates a U/I screen where a row of a plurality of category options for selecting a category and a row of a plurality of icons which is an option belonging to what is selected among the plurality of category options are orthogonally disposed, and when a selection of the option in the row of the plurality of category options is changed by the input user operation, an icon rotator which changes the plurality of icons from icons corresponding to those before a change of the category to icons corresponding to those after the change of the category by an animation display which causes the icon to rotate around the rotation axis in the same direction as a direction of the row of icons.

## Description

### CROSS REFERENCE TO RELATED APPLICATIONS

This application claims the benefit of Japanese Priority Patent Application JP 2012-286727 filed December 28, 2012, the entire contents of which are incorporated herein by reference.

### BACKGROUND

The present disclosure relates to an information processing device, an information processing method, and a program, and particularly to an information processing device where convenience is improved for a user interface screen that inputs user's various types of operations, an information processing method, and a program.

In recent years, digital consumer electronics have become multi-functionalized, and settings and operations from a user with respect to the digital consumer electronics have also become complicated.

Particularly, in a field of AV equipment represented as a TV (television) receiver, various operations have increased, such as an operation to select a connected external device, an operation to select a content to play, or an operation to change various types of settings. A user wants to more easily perform these operations, and thus, a user interface (hereinafter, referred to as U/I) screen corresponding to the user's want has been requested.

Therefore, the applicant has previously proposed various U/I screens which are easily used by a user. For example, a U/I screen has been proposed, which is referred to as a cross media bar (a trademark of Sony Corporation and Sony computer entertainment) disposing an icon for selecting various types of operations and setting items on a screen in a cross shape (refer to Japanese Unexamined Patent Application Publication No. 2004-356774 (Japanese Patent No. 4240293)). The U/I screen is adapted to the TV receiver, a video recorder, a home-use game console, and the like.

### SUMMARY

Various aspects and features of the invention are defined in the appended claims.

In the future, various types of operations with respect to digital consumer electronics such as a TV receiver and the like is assumed to increase. Therefore, the U/I screen with high visibility for a user and high convenience which allows the operation and the settings of the contents to be intuitively understood by the user is necessary.

It is desirable to realize a U/I screen that provides high convenience for the user.

According to an embodiment of the present disclosure, there is provided an information processing device, including an operation input unit which inputs a user operation, a U/I screen generation unit which generates a U/I screen where a row of a plurality of category options for selecting a category and a row of a plurality of icons which is an option belonging to what is selected among the plurality of category options are orthogonally disposed, and an icon rotator which, when a selection of the option in the row of the plurality of category options is changed by the input user operation, changes the plurality of icons from icons corresponding to those before the change of the category to icons corresponding to those after the change of the category by an animation display which causes the icon to rotate around a rotation axis in the same direction as a direction of the row of the icons.

The icon rotator, when the selection of an option in the row of the plurality of category options is changed to the option of others aligned in a first direction by the input user operation, and when the selection of an option is changed to the option of others aligned in a second direction which is opposite to the first direction, may respectively have a rotation direction of the icon which is contrary to each other in an animation display which causes the icon to rotate around a rotation axis in the same direction as the direction of the row of icons.

The icon rotator, when the selection of an option in the row of the plurality of category options is changed by the input user operation, may change the plurality of icons from the icons corresponding to those before the change of the category to the icons corresponding to those after the change of the category with time difference through the animation display which causes the icons to rotate around the rotation axis in the same direction as the direction of the row of icons.

The icon rotator, when the selection of an option in the row of the plurality of category options is changed by the input user operation, may change the plurality of icons from icons corresponding to those before the change of the category to icons corresponding to those after the change of the category with an irregular time difference through an animation display which causes the icon to rotate around the rotation axis in the same direction as the direction of the row of icons.

The operation input unit may include an operation sound output unit and a light-emitting unit, and the icon rotator, the operation sound output unit, and the light-emitting unit, may be synchronized to operate.

The icon may be a tile in a plate shape.

The tile may have an image area and a text area.

A photo corresponding to the tile can be displayed in the image area of the tile, and a character row corresponding to the tile may be scroll-displayed in the text area of the tile.

The icon rotator, when adding a new icon to the row of icons, may further cause the new icon to emerge through the animation display which causes the new icon to rotate around the rotation axis in the same direction as the direction of the row of category options, and when removing an icon from the row of icons, the icon rotator may remove the icon through the animation display rotated counterclockwise when adding the new icon.

According to the embodiment, the information processing device may further include a superimposing unit which causes the U/I screen to be superimposed onto a content screen, which displays contents, with transparency.

The superimposing unit, when displaying the U/I screen, may reduce the enlarged U/I screen to the original size while moving the U/I screen from the screen front side to the screen back side to cause the U/I screen to be superimposed onto the content screen, and when removing the U/I screen, the superimposing unit may enlarge and remove the U/I screen superimposed onto the content screen while moving the U/I screen from the screen back side to the screen front side.

According to another embodiment of the present disclosure, there is provided an information processing method of an information processing device, including inputting a user operation by the information processing device; generating a U/I screen on which a row of a plurality of category options for selecting a category and a row of a plurality of icons, which are options belonging to what is selected among the plurality of category options, are orthogonally disposed; and changing the plurality of icons from icons corresponding to those before the change of the category to icons corresponding to those after the change of the category by an animation display causing the icon to rotate around the rotation axis in the same direction as a direction of the row of icons when a selection of the option in the row of the plurality of category options is changed by the input user operation.

According to still another embodiment of the present disclosure, there is provided a program causing a computer to function as: an operation input unit which inputs a user operation; a U/I screen generation unit which generates a U/I screen on which a row of a plurality of category options for selecting a category and a row of a plurality of icons which are options belonging to what is selected among the plurality of category options are orthogonally disposed; and an icon rotator, when a selection of the option is changed in the row of the plurality of category options by the input user operation, changes the plurality of icons from icons corresponding to those before a change of the category to icons corresponding to those after the change of the category by an animation display which causes the icon to rotate around the rotation axis in the same direction as a direction of the row of icons.

In the embodiment of the present disclosure, a U/I screen is generated, on which the row of the plurality of category options for selecting a category and the row of the plurality of icons which is an option belonging to what is selected among the plurality of category options are orthogonally disposed, and when the selection of an option is changed in the row of the plurality of category options by a user operation, the plurality of icons is changed from icons corresponding to those before the change of category to icons corresponding to those after the change of category through the animation display which causes the icon to rotate around the rotation axis in the same direction as the direction of the row of icons.

According to the embodiments of the present disclosure, a U/I screen that provides high convenience for a user can be realized.

### BRIEF DESCRIPTION OF THE DRAWINGS

Embodiments of the invention are now described with reference to the drawings, throughout which like references denote like parts and in which
Fig. 1 is a block diagram showing a configuration example of a TV receiver where the present disclosure is applied.
Fig. 2 is a block diagram showing a detailed configuration example of a U/I generation unit.
Figs. 3A and 3B are diagrams for describing a multilayered structure of a screen.
Fig. 4 is a diagram representing a display example of a U/I screen.
Fig. 5 is a diagram representing the details of a tile.
Fig. 6 is a diagram representing a display example of the U/I screen.
Figs. 7A to 7F are diagrams representing a screen transition when the U/I screen is displayed.
Figs. 8A to 8E are diagrams representing a screen transition when a category is changed in the U/I screen.
Figs. 9A to 9I are diagrams describing a rotation of the tile in the U/I screen.
Figs. 10A to 10F are diagrams describing a screen transition at the time of adding the tile in the U/I screen.
Figs. 11A and 11B are diagrams describing a screen transition at the time of deploying a folder having a layered structure.
Figs. 12A to 12D are diagrams describing a screen transition at the time of deploying the folder having the layered structure.

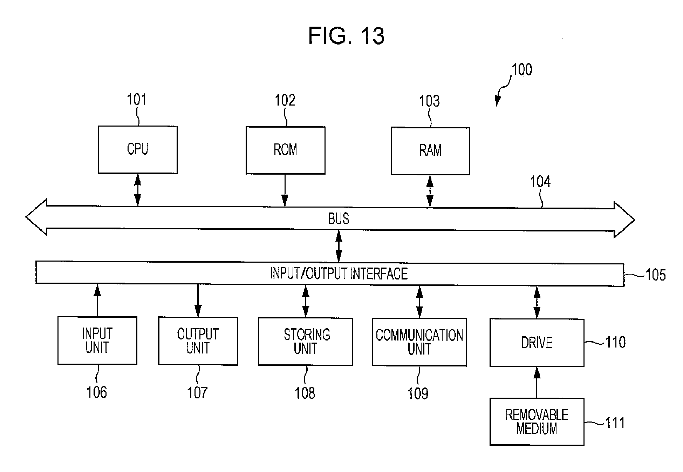

Fig. 13 is a block diagram showing a configuration example of a computer.

### DETAILED DESCRIPTION OF EMBODIMENTS

Hereinafter, a best form for implementing the present disclosure (hereinafter, referred to as an embodiment) will be described in detail referring to drawings.

### Embodiment

### A Configuration Example of TV Receiver

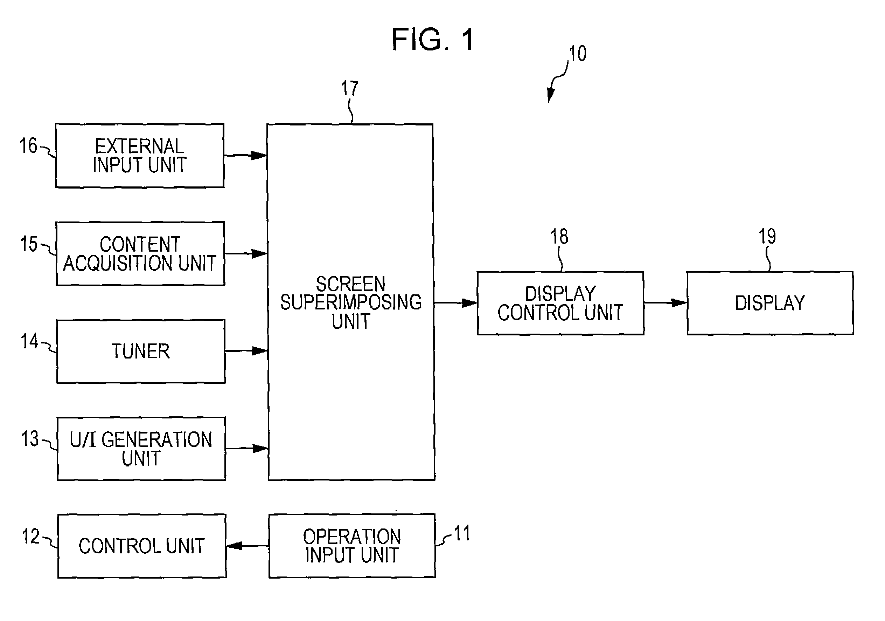

Fig. 1 shows a configuration example of a TV receiver which is an embodiment of the present disclosure. In the following, reference will be made only to a portion which processes an image from a TV program and the like of the TV receiver 10, but the TV receiver 10, of course, has a portion to process audio from the TV program and the like. However, the portion to process audio such as the TV program and the like is not directly related to the present disclosure, so that description thereof will be omitted.

The TV receiver 10 includes an operation input unit 11, a control unit 12, a U/I generation unit 13, a tuner 14, a content acquisition unit 15, an external input unit 16, a screen superimposing unit 17, a display control unit 18, and a display 19.

The operation input unit 11 has a remote controller operated by a user (hereinafter, briefly referred to as remocon), a receiving unit receiving an operation signal transmitted by the remocon, a light-emitting unit emitting light in response to reception of an operation signal by the receiving unit, and an operation sound output unit outputting an operation sound (nothing shown).

In the operation input unit 11, the remocon outputs an operation signal in response to an operation from a user, and outputs an operation signal received by the receiving unit to the control unit 12.

The light-emitting unit is provided on the outer frame around the display 19 of the TV receiver, and when the receiving unit receives the operation signal, the light-emitting unit emits light in synchronization with a predetermined operation sound output by the operation sound output unit. Furthermore, a screen transition on the U/I screen (to be described) is performed in synchronization with light emission of the light-emitting unit and an output of an operation sound based on an operation signal.

The control unit 12, based on an operation signal from the operation input unit 11, controls each portion of the TV receiver 10. The illustration of a control line from the control unit 12 to each portion of the TV receiver is omitted.

The U/I generation unit 13 generates a video signal of the U/I screen or the U/I option screen for inputting an operation, various types of changes in settings and the like to the TV receiver 10 by a user and outputs the video signal to the screen superimposing unit 17.

The tuner 14 extracts and decodes a TS of a channel corresponding to a channel selection by a user from a TV signal input through an antenna line which is not shown, and inputs a video signal of a TV program to the screen superimposing unit 17. The content acquisition unit 15 accesses a predetermined server through a bidirectional communication network such as the internet and the like, acquires contents such as a moving image, and outputs the video signal thereof to the screen superimposing unit 17. In addition, the content acquisition unit 15 acquires and performs an application program from a predetermined server, and outputs a video signal of a display screen thereof to the screen superimposing unit 17.

The external input unit 16 inputs a video signal of a moving image and a still image which are input from an external device (for example, a video recorder, a set-top box, a USB memory, and the like) connected to a terminal of the TV receiver 10 (HDMI terminal, D-shaped terminal, component terminal, S terminal, RCA terminal, USB terminal, and the like) to the screen superimposing unit 17.

When a user watches a TV program, the screen superimposing unit 17 outputs a video signal of the TV program, which is input from the tuner 14, to the back-end. In the same manner, when the user watches contents acquired by the external device and the predetermined server, the screen superimposing unit 17 outputs a video signal of the contents to the back end. Then, when a display of the U/I screen is instructed by the user, the U/I screen from the U/I generation unit 13 is output to the display control unit 18 of the back end by generating a video signal in a state of being superimposed onto a screen such as a TV program and the like.

The display control unit 18 performs a predetermined signal processing suitable for the display 19 of the back-end on a video signal input from the screen superimposing unit 17 to output the processed video signal to the display 19. The display 19 displays a screen corresponding to the input video signal.

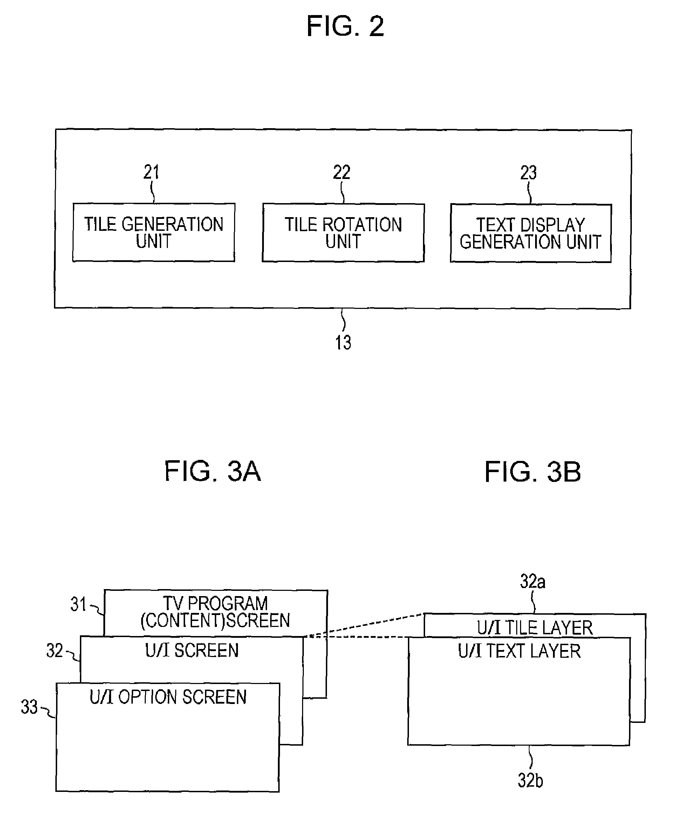

Fig. 2 shows a detailed configuration example of the U/I generation unit 13. The U/I generation unit 13 includes a tile generation unit 21, a tile rotator 22, and a text display generation unit 23.

The tile generation unit 21 causes an icon (referred to as tile in the present disclosure) selected by a user when instructing various types of operations, changes in settings and the like to be displayed on the U/I screen. The tile rotator 22 controls an animation display where a tile is seen rotating on the U/I screen. The text display generation unit 23 controls various types of text display on the U/I screen.

### Superimpose of Screen

Next, Figs. 3A and 3B are diagrams for describing the superimposition of a screen.

As shown in Fig. 3A, a screen has a multi-layered structure in which a TV program (content) screen 31, the U/I screen 32, and the U/I option screen 33 are displayed in order from a lower layer.

When a TV program is being watched, only a TV program (content) screen 31 is displayed, and when the U/I screen 32 is displayed according to a predetermined operation by a user at the time a TV program is being watched, the U/I screen 32 is superimposed onto the TV program (content) screen 31 in a transparent state. That is, the TV program (content) screen 31 is the lower layer (background) of the U/I screen 32. At this time, the TV program (content) screen 31 is seen through the lower layer of the U/I screen 32, but brightness and the like are reduced to an extent that visibility for the U/I screen 32 is not impaired.

However, when a tile belonging to the category of "application" in the U/I screen 32 is selected, on the TV program (content) screen 31 which is the lower layer (background) of the U/I screen 32, images (moving image or still image) associated with an application corresponding to the selected tile are displayed.

That is, an image on the TV program (content) screen 31 which is the lower layer (background) of the U/I screen 32 is determined according to a relation between the selected tile and the received TV program (or the acquired content).

Furthermore, when the U/I option screen 33 is displayed according to a predetermined operation by a user in the U/I screen 32, the U/I option screen 33 is superimposed onto the U/I screen 32 in a transparent state. At this time, the U/I screen 32 and the TV program (content) screen 31 are seen through on the lower layer of the U/I option screen 33, but brightness and the like are reduced to an extent that visibility for the U/I option screen 33 is not impaired.

As shown in Fig. 3B, the U/I screen 32 is made from a U/I tile layer 32a and a U/I text layer 32b, and when a tile and a text are superimposed onto each other in the U/I screen 32, the U/I text layer 32b is displayed on the U/I tile layer 32a.

### Display Example of U/I Screen

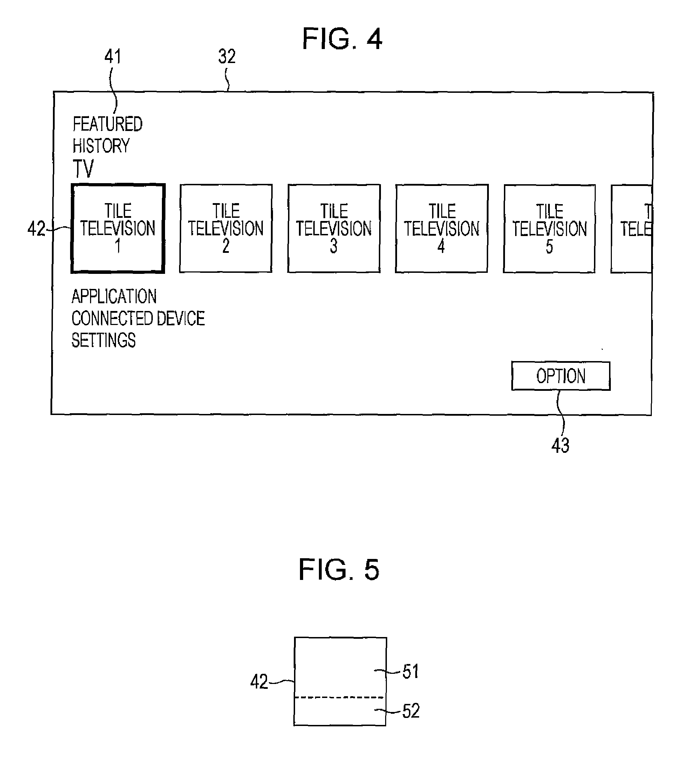

Next, Fig. 4 shows a display example of an initial state of the U/I screen 32.

On the U/I screen 32, all of category names 41 dividing various types of operation of the TV receiver 10 are vertically arranged. In Fig. 4, as the category names 41, "featured", "history", "television (TV)", "application", "connected device", and settings (Settings) are displayed. In this way, all of the category names 41 are displayed on the U/I screen 32, and thereby a user can quickly find a category to operate.

In addition, on the U/I screen 32, those selected among all of the category names 41 are displayed so as to be distinguished from those not selected. In Fig. 4, "television" is selected, and is displayed near the center of the screen with a larger and thicker character size than the other category names 41. Accordingly, the user can quickly grasp the category names 41 which is being selected.

Furthermore, right below the category names 41 which is being selected on the U/I screen 32, tiles 42 each corresponding to each operation belonging to the category are horizontally arranged. Among the plurality of arranged tiles 42, those selected are displayed so as to be distinguished from those not selected. In Fig. 4, only a tile "television 1" is attached and displayed.

In Fig. 4, a plurality of tiles 42 (tile "television 1", tile "television 2", and so forth) which belong to a category of 'television' and each correspond to a channel selection operation of each channel are arranged. A user can select a channel corresponding to the television 1 by, for example, selecting and determining a tile "television 1". In addition, the user can randomly change an alignment order of a tile "television 1", a tile "television 2", and the like. A portion of a tile "television 6" displayed on the right side of a tile "television 5" means there are more tiles on the right side of the tile "television 5".

Fig. 5 shows the details of the tile 42. The tile 42 is configured to have an image area 51 and a text area 52. In the image area 51, an image is displayed so that a user can quickly recognize an operation corresponding to the tile 42. In the text area 52, a character row describing a corresponding operation is displayed. The character row is scroll-displayed when the character row is long enough to exceed the horizontal width of the tile 42.

For example, the tile 42 belonging to the category of "television", in the image area 51, displays images of a TV program which is currently being broadcasted with a channel to be selected with a moving image or a still image, and display a mark and a logotype of a broadcasting station and the TV program.

In addition, for example, the tile 42 belonging to the category of "connected device", in the image area 51, displays a photo, an illustration, a mark, a logotype, and the like of a terminal (HDMI terminal, D-shaped terminal, component terminal, S terminal, RCA terminal, USB terminal, and the like) which the TV receiver 10 has.

In addition, for example, the tile 42 belonging to the category of "application" displays a mark, a logotype, and the like of application in the image area 51.

Returning to Fig. 4, furthermore, in the U/I screen 32, when the category names 41 or the tile 42 capable of performing an option operation is selected, an option button 43 is displayed as much as a predetermined time (about several seconds) at the lower right corner of the screen. By displaying the option button 43, it is possible to notify that the option operation for the user is possibly performed.

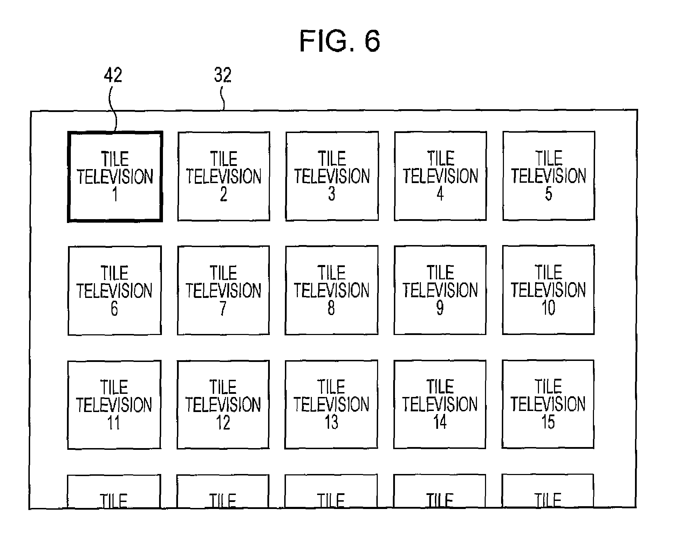

When the option button 43 is selected and determined by the user, the U/I option screen 33 for instructing an option operation is superimposed onto the U/I screen 32 and displayed. For example, there is "display all of the tiles" and the like as an option operation, and when the user selects and determines this, all of the tiles 42 belonging to the category of "television" are displayed on the U/I screen 32 as shown in Fig. 6.

However, when all of the tiles 42 are not displayed on the screen, a portion of the tiles 42 is displayed on the edge of the screen (in Fig. 6, bottom edge). In this manner, by displaying a portion of the tiles 42, it is possible to notify the user of presence of the tiles 42 which are not displayed, and by the user's scrolling of the screen, it is possible to display the tiles 42 which are not displayed.

In the embodiment, in the U/I screen 32, the category names 41 are vertically arranged and the tiles 42 belonging to the selected category are horizontally arranged to be a T-shape, but they may be arranged in a cross shape. In addition, the category names 41 may be horizontally arranged and the tiles 42 belonging to the selected category may be vertically arranged to be the T-shape or the cross shape.

Screen Transition when U/I Screen 32 is Displayed

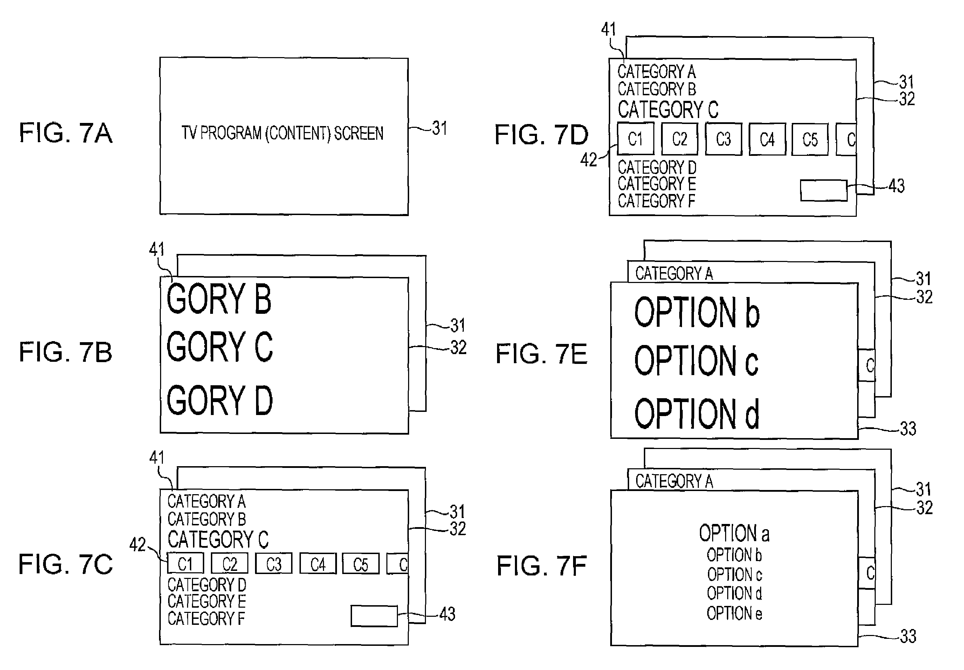

Next, Figs. 7A to 7F represent a screen transition when the U/I screen 32 is displayed. In the following description and drawings, character rows of the category names 41 are marked as category A to category F, for example, tiles belonging to a category C are marked as C1, C2, and so forth.

As shown in Fig. 7A, when a predetermined operation to display the U/I screen 32 is input by a user in a case where only the TV program (content) screen 31 is displayed, the display of the U/I screen 32 is started. That is, as shown in Fig. 7B, the U/I screen 32 where only the category names 41 are disposed is disposed on the TV program (content) screen 31 while being moved from the screen front side to the screen back side and reduced. The transparency may be gradually increased during the movement of the U/I screen 32 and the TV program (content) screen 31 may be gradually seen through.

Then, when the U/I screen 32 is disposed on the TV program (content) screen 31, as shown in Fig. 7C and Fig. 7D, the U/I screen belongs to the category right below the category (in case of Figs. 7C and 7D, category C) selected in an initial state. The tiles 42 in a plate shape emerge while rotating at 90 degree around a rotation axis extending in a horizontal direction. The rotation of the tiles 42 will be described. In this way, there is time difference in a display of the category names 41 and a display of the tiles 42, and thereby it is possible to impress the user with an affiliation relationship between the category names 41 and the tiles 42.

When the option button 43 of the U/I screen 32 is further selected and determined, as shown in Fig. 7E and Fig. 7F, similarly to the display of the U/I screen 32, the U/I option screen 33 is disposed on the U/I screen 32 while being moved from the screen front side to the screen back side and reduced.

When the U/I option screen 33 and the U/I screen 32 are closed (removed) in response to a predetermined operation by a user, a display opposite the screen transition described above is performed. That is, the U/I option screen 33 and the U/I screen 32 are removed from the screen while being moved from the screen back side to the screen front side direction and enlarged.

Screen Transition during Changes in Category on the U/I Screen

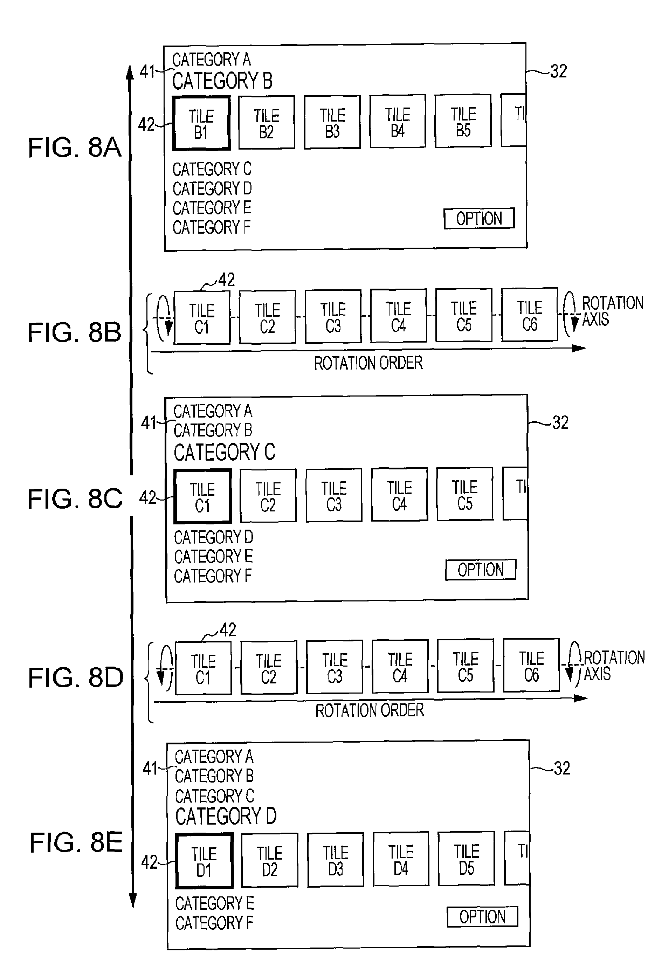

Fig. 8 represents a screen transition when a category is changed in the U/I screen 32.

In the U/I screen 32, when a category B is selected according to a predetermined operation of a user (for example, pressing a upward button provided on the remocon, and the like) from a state where a category C is selected, the U/I screen 32 transits from Fig. 8C to Fig. 8A.

At this time, tiles C1, C2, and so forth belonging to the category C, as shown in Fig. 8B, are switched to tiles B1, B2, and so forth belonging to a category B by an animation display moving slightly upward from right below the category C to right below the category B while rotating at 180 degree around a rotation axis horizontally extending through the center of a side of the vertical direction.

When a tile moves while rotating, as shown in Fig. 3B, the U/I text layer 32b is on the U/I tile layer 32a, so that the animation display is performed so that the tiles C1, C2, and so forth pass through under the character row of the category C. Accordingly, it is possible to visually inform the user of that the selected category is changed.

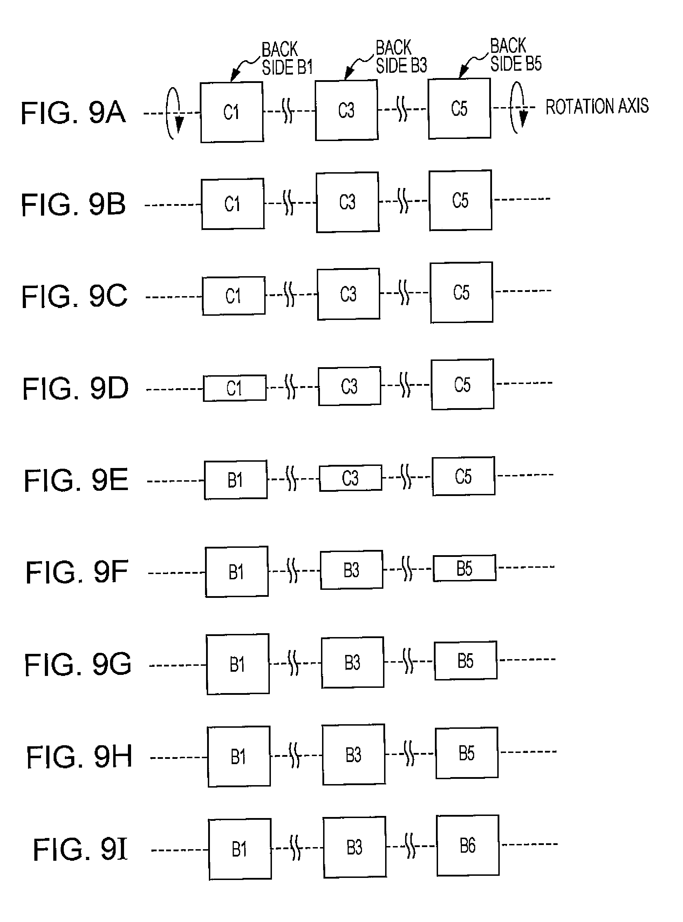

Figs. 9A to 9I represent how the tiles C1, C2, and so forth in Fig. 9A to Fig. 9I are switched to the tiles B1, B2, and so forth by rotation.

That is, the tiles C1, C2, and so forth belonging to the category C are in a plate shape, have a display corresponding to the category B on the back surface thereof, and are switched to the tiles B1, B2, and so forth belonging to the category B sequentially from the left side through the animation display whose top rotates in the screen back direction and whose bottom rotates in the screen front direction each at 180 degree, centering around the rotation axis extending in a horizontal direction through the center of the surface in the vertical direction thereof.

The tiles C1, C2, and so forth, contrarily to the above description, that is, may have the top rotating in the screen front direction and the bottom rotating in the screen back direction at 180 degree. In addition, a time interval in a rotation of the tiles C1, C2, and so forth may be constant, or variable such as, for example, narrowing the time interval on the more right side. The tiles C1, C2, and so forth may be rotated all together.

In the U/I screen 32, when a category D is selected according to a predetermined operation by the user from a state where the category C is selected (for example, pressing a downward button including the remocon), the U/I screen 32 transits from Fig. 9C to Fig. 9E.

At this time, the tiles C1, C2, and so forth belonging to the category C, as shown in Fig. 9D, are switched to tiles D1, D2, and so forth belonging to the category D through the animation display moving slightly downward from right below the category C to right below the category D while being rotated at 180 degree around the rotation axis passing through the center of the side of the vertical direction.

At this time, a rotation of the tiles C1, C2, and so forth is performed in an opposite direction to when the category is moved upward. When the tiles rotate and move, as shown in Fig. 3B, the U/I text layer 32b is on the U/I tile layer 32a. Therefore, the animation display is performed so that the tiles C1, C2, and so forth pass under the character row of the category D. Accordingly, it is possible to visually inform the user of that the selected category is changed.

The tiles 42 are in a plate shape in the embodiment, but the tiles 42 may be displayed in a pillar shape (in this case, hexagonal pillar) which has side surfaces as many as the number of categories (in this case, six) instead of the tiles in a plate shape. For example, in case of hexagonal pillar, when the category C is changed to the next category D, the hexagonal pillar is rotated at 60 degree.

Screen Transition when Adding Tile in U/I Screen

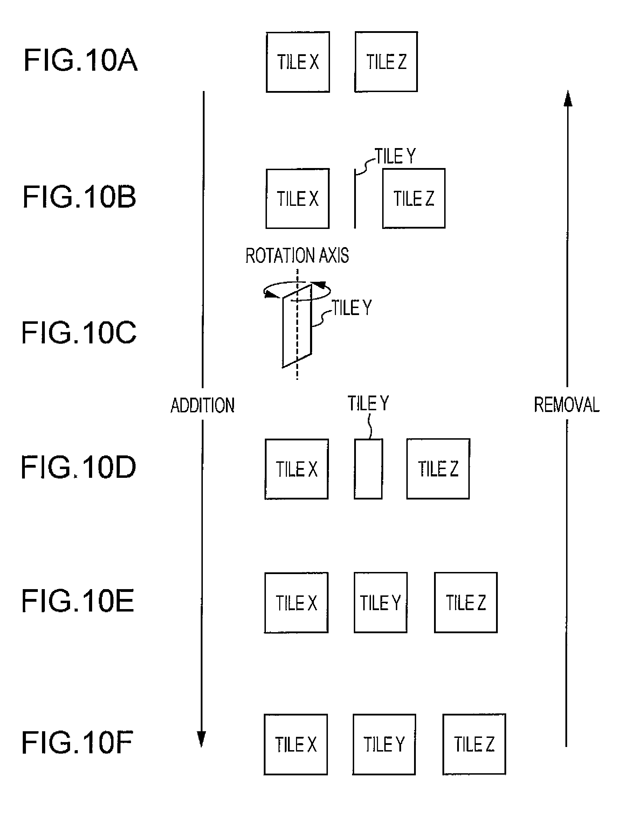

Next, Figs. 10A to 10F represent a screen transition at the time of adding the tile in the U/I screen.

Addition of the tiles 42 is performed, for example, when the category of "connected device" is selected among initial categories in the U/I screen 32 and the tiles 42 belonging to the connected device are arranged and the like after an electronic device is connected to a terminal of the TV receiver 10 (for example, a USB memory is connected to a USB terminal) .

Specifically, between a tile X and a tile Z shown in Fig. 10A, as shown in Fig. 10B, a tile Y in a plate shape emerges so as to fit the side surface thereof in between the tile X and the tile Z. Then, as shown in Fig. 10C, the animation display is performed so that a front surface of the tile Y is gradually seen by rotating around the center of the horizontal side regarded as a rotation axis at 90 degree as shown in Figs. 10B to 10F.

On the contrary, the removal of the tiles 42 (tile Y) is performed, for example, when the category of "connected device" among the initial categories in the U/I screen 32 is selected and the tiles 42 belonging to the connected device are arranged and the like after an electronic device connected to the terminal of the TV receiver 10 is taken off. In a display of the tile Y at this time, the animation display which is rotated counterclockwise when the tile Y described above is added and disappears is performed.

An additional animation display of the tiles 42 described above can also be applied even to, for example, when representing a tile with a high importance among a plurality of tiles arranged in a horizontal direction or updating an image and a text displayed inside the tiles 42. Contrarily, the removed animation display of the tiles 42 described above can be applied to when displaying a tile with a low importance among the plurality of tiles arranged in a horizontal direction for a fixed time and then removing the tile, and the like.

In this way, by using the animation display added or removed while the tiles 42 rotate, it is possible to visually inform the user of that a new device is connected, there is important information, and the like.

Screen Transition during Deployment of Folder having Layered Structure

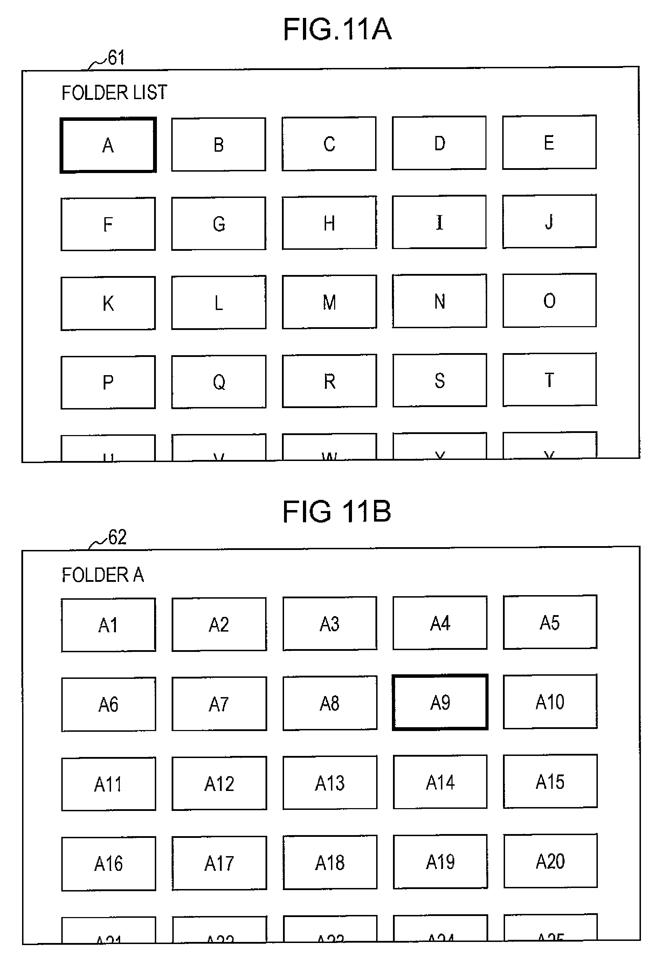

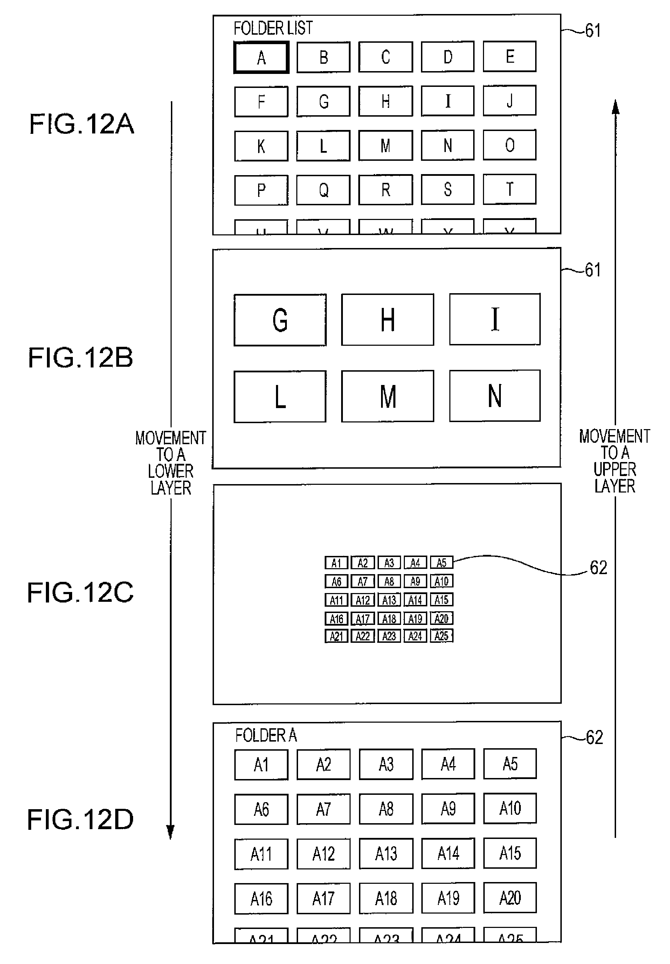

Next, Figs. 11A to 11B and 12A to 12D represent a screen transition during a deployment of a folder having a layered structure.

The screen transition during the opening and closing of a folder having a layered structure to be described below is performed, for example, when reading image data recorded in the folder having the layered structure from a USB memory connected to a USB terminal of the TV receiver 10.

Fig. 11A is a display example of a folder list screen 61 where a folder A, a folder B, and so forth on the same layer are disposed on the same screen, and shows a state where the folder A is selected. In the folder list screen 61, when the folder A is selected and determined, a folder A screen 62 is displayed where a folder A1, a folder A2, and so forth belonging to the folder A are disposed on the same screen as shown in Fig. 11B. The folder list screen 61 and the folder A screen 62 are generated by an application performed by the external input unit 16, and an animation display of the screen transition as shown in Figs. 8A to 8E are performed by the screen superimposing unit 17.

That is, in the folder list screen 61 shown in Fig. 12A, when the folder A is selected and determined by an operation from a user, as shown in Figs. 12B to 12D, the figure B to the figure D, the folder list screen 61 is removed while being moved from the screen back side to the screen front side and is enlarged. Then, the reduced folder A screen 62 emerges and the animation display is performed so that the folder A screen 62 is enlarged while being moved from the screen back side to the screen front side and being disposed on the screen.

When raising a layer of a folder displayed according to a predetermined operation of a user (when closing a folder being displayed), the animation display opposite the screen transition described above is performed.

Through the animation display, it is possible to visually inform the user of a vertical relationship between layers of the folder and an opening/closing operation thereof.

The animation display can be applied to not only opening and closing of a folder, but also to movement of a layer at the time of displaying folders having a layered structure.

The U/I screen 32 and the folder list screen 61 described above can be applied not only to the TV receiver 10 which is an embodiment of the present disclosure, but also to any electronic device including the U/I screen.

Meanwhile, a series of processing described above can be performed by hardware, and can also be performed by software. When the series of processing is performed by software, a program configuring the software is installed in a computer. The computer includes a computer which is built with the dedicated hardware and a computer which can perform various types of functions by installing various types of programs, for example, a personal computer for general purpose, and the like.

Figs. 11A and 11B are block diagrams describing a configuration example of computer hardware performing the series of processing described above using a program.

In the computer 100, a Central Processing Unit (CPU) 101, a Read Only Memory (ROM) 102, a Random Access Memory (RAM) 103 are connected to each other by the bus 104.

The bus 104 is further connected to an input/output interface 105. The input/output interface 105 is connected to an input unit 106, an output unit 107, a storing unit 108, a communication unit 109, and a drive 110.

The input unit 106 includes a keyboard, a mouse, a microphone, and the like. The output unit 107 includes a display, a speaker, and the like. The storing unit 108 includes a hard disk, a non-volatile memory, and the like. The communication unit 109 includes a network interface and the like. The drive 110 drives a removable medium 111 such as a magnetic disk, an optical disk, a magneto-optical disk, or a semiconductor memory.

In the computer 100 configured as described above, for example, the CPU 101 loads a program stored in the storing unit 108 to the RAM 103 through the input/output interface 105 and the bus 104 and performs the program, and thereby the series of processing described above is performed.

A program performed by the computer may be a program whose processing is performed in a time series along an order described herein, or may also be a program whose processing is performed at a necessary timing such as when a calling is made.

The embodiment of the present disclosure is not limited to the embodiment described above, and can be variously modified in a range without departing from the gist of present the disclosure.

## Claims

1. An information processing device comprising:
an operation input unit which inputs a user operation;
a U/I screen generation unit which generates a U/I screen where a row of a plurality of category options for selecting a category and a row of a plurality of icons which is an option belonging to what is selected among the plurality of category options are orthogonally disposed; and
an icon rotator, when a selection of the option in the row of the plurality of category options is changed by the input user operation, which changes the plurality of icons from icons corresponding to those before the change of the category to icons corresponding to those after the change of the category by an animation display which causes the icons to rotate around a rotation axis in the same direction as a direction of the row of icons.

2. The information processing device according to claim 1,
wherein the icon rotator, when the selection of an option in the row of the plurality of category options is changed to the option of others aligned in a first direction by the input user operation, and when the selection of an option is changed to the option of others aligned in a second direction which is opposite to the first direction, respectively has a rotation direction of the icon which is contrary to each other, in an animation display which causes the icon to rotate around a rotation axis in the same direction as the direction of the row of icons.

3. The information processing device according to claim 1 or 2,
wherein the icon rotator, when the selection of the option in the row of the plurality of category options is changed by the input user operation, changes the plurality of icons from the icons corresponding to those before the change of the category to the icons corresponding to those after the change of the category with time difference through the animation display which causes the icons to rotate around the rotation axis in the same direction as the direction of the row of icons.

4. The information processing device according to anyone of claims 1 to 3,
wherein the icon rotator, when the selection of an option in the row of the plurality of category options is changed by the input user operation, changes the plurality of icons from the icons corresponding to those before the change of the category to the icons corresponding to those after the change of the category with an irregular time difference through the animation display which causes the icon to rotate around the rotation axis in the same direction as the direction of the row of icons.

5. The information processing device according to anyone of claims 1 to 4,
wherein the operation input unit includes an operation sound output unit and a light-emitting unit, and
wherein the icon rotator, the operation sound output unit, and the light-emitting unit are synchronized to operate.

6. The information processing device according to anyone of claims 1 to 5,
wherein the icon is a tile in a plate shape.

7. The information processing device according to claim 6,
wherein the tile includes an image area and a text area.

8. The information processing device according to claim 7,
wherein a photo corresponding to the tile is displayed in the image area of the tile, and
wherein a character row corresponding to the tile is scroll-displayed in the text area of the tile.

9. The information processing device according to anyone of claims 1 to 8,
wherein the icon rotator, when adding a new icon to the row of icons, further causes the new icon to emerge through the animation display which causes the new icon to rotate around the rotation axis in the same direction as the direction of the row of category options, and
wherein the icon rotator, when removing an icon from the row of icons, removes the icon through the animation display rotated counterclockwise when adding the new icon.

10. The information processing device according to anyone of claims 1 to 9, further comprising:
a superimposing unit which causes the U/I screen to be superimposed onto a content screen displaying contents that is transparent.

11. The information processing device according to claim 10,
wherein the superimposing unit, when displaying the U/I screen, reduces the enlarged U/I screen to the original size while moving the U/I screen from the screen front side to the screen back side to cause the U/I screen to be superimposed onto the content screen, and
wherein the superimposing unit, when removing the U/I screen, enlarges and removes the U/I screen superimposed onto the content screen while moving the U/I screen from the screen back side to the screen front side.

12. An information processing method of an information processing device, comprising:
inputting a user operation;
generating a U/I screen on which a row of a plurality of category options for selecting a category and a row of a plurality of icons, which are options belonging to what is selected among the plurality of category options, are orthogonally disposed; and
changing the plurality of icons from icons corresponding to those before the change of the category to icons corresponding to those after the change of the category by an animation display causing the icon to rotate around the rotation axis in the same direction as a direction of the row of icons when a selection of the option in the row of the plurality of category options is changed by the input user operation.

13. A program which causes a computer to function as:
an operation input unit which inputs a user operation;
a U/I screen generation unit which generates a U/I screen on which a row of a plurality of category options for selecting a category and a row of a plurality of icons which are options belonging to what is selected among the plurality of category options are orthogonally disposed; and
an icon rotator, when a selection of an option is changed in the row of the plurality of category options by the input user operation, which changes the plurality of icons from icons corresponding to those before a change of the category to icons corresponding to those after the change of the category by an animation display causing the icon to rotate around the rotation axis in the same direction as a direction of the row of icons.
